# EUROPÄISCHE PATENTANMELDUNG

(11) **EP 3 731 479 A1**
(43) Veröffentlichungstag der Anmeldung: **28.10.2020**
(21) Anmeldenummer: 19000198.2
(22) Anmeldetag: 24.04.2019
(51) Int. Cl.: H04L 29/06

(54) **VERFAHREN IN EINEM SYSTEM ZUR ANWAHL EINER RUFNUMMER ÜBER EINE VOIP-PLATTFORM MIT EINEM MOBILEN FUNKGERÄT**

(71) Anmelder: Westermaier, Andreas, 85356 Freising (DE)
(72) Erfinder: Westermaier, Andreas, 85356 Freising (DE)
(74) Vertreter: Szaunig, Bernd

(57) **Zusammenfassung**

Mit der vorliegenden Erfindung wird ein Verfahren in einem System System (1) zur IP-Telefonie vorgestellt, das sich durch das besondere Zusammenwirken zwischen einem, von einem an einen Router angeschlossenen Endgerät anrufenden Gesprächsteilnehmer (2) und einem beliebigen angerufenen Gesprächsteilnehmer (3, 4) auszeichnet, womit die Kosten für Gespräche vom Endgerät in Mobilfunknetze und andere Netze erheblich gesenkt werden können oder sogar komplett entfallen, bzw. die aktuellen Gesprächskosten aus dem Mobilfunknetz (9) verrechnet werden. Dazu beinhaltet das Mobilfunkgerät (6) eine Software (7), die zusammen mit einem entsprechend konfigurierten Router (5) die IP-Telefonie von an diesem Router angeschlossenen Endgeräten (2) über ein Mobilfunknetz ermöglicht. Um unter anderem die Qualität der Sprechdaten zu verbessern, wird bei Anschluss eines Headsets an das Mobilfunkgerät (6) auf elektrisch/elektronischem Wege eine Verbindung zwischen dem Kopfhörer (13) und den Mikrofon (12) mittels einer Schalteinheit (14) eine Verbindung hergestellt, wodurch der Zugriff auf die an der Schalteinheit (14) anliegenden Sprachdaten ermöglicht wird.

## Beschreibung

Die vorliegende Erfindung befasst sich mit einem Verfahren in einem System zur Anwahl einer beliebigen Rufnummer über einen Router und eine VoIP-Plattform, insbesondere über die Mobilfunknetzverbindung eines ausgewählten Anbieters, sowie die Erreichbarkeit eines mit einem Mobilfunknetz verbundenen Endgeräts über einen Router und eine VoIP-Plattform, wobei die Sprachdaten des Mikrofons und des Kopfhörers über eine Schalteinheit dem Mobilfunkgerät zugeführt werden.

Im Stand der Technik ist typischerweise in einem Haushalt ein Telefon- und Internetanschluss bei mindestens einem entsprechenden Anbieter (Telekom, 1&1, usw.) installiert. Um den Telefon- und Internetanschluss zu nutzen, weist das häusliche Kommunikationssystem i.d.R. einen Router auf, der mit dem Telefon- und Internetanschluss verbunden ist. Darüber hinaus weisen diese Router heutzutage auch gleichzeitig die Möglichkeiten einer Telefon-Anlage, insbesondere zur Internet-Telefonie (VoIP, Voice over IP), sowohl intern als auch extern, sowie zur drahtlosen Datenübertragung per WLAN (Wireless Local Area Network) auf.

Endgeräte wie Telefone, VoIP-Telefone, Fax, Anrufbeantworter etc.. sind nicht mehr direkt mit dem Telefonanschluss verbunden, sondern mit dem Router, der wiederum die Verbindung zum Telefonnetz herstellt. Dem Kunden ist es dabei gleichgültig über welche Technik der Telefonanschluss realisiert wird, z.B. Analog (PSTN), ISDN, VoIP (Voice over Internet Protocol), VoLTE (Voice over LTE) o.a. Der Router stellt dabei die Anschlüsse für die Telefongeräte zur Verfügung, so dass der eigentliche Rufaufbau bei eingehenden und ausgehenden Gesprächen stets über den Router erfolgt.

Alle Gespräche werden also über den Router zum Telefon-Anbieter geschickt. Moderne Router bieten darüber hinaus die Möglichkeit, mehrere Anbieter parallel zu bedienen, zu welchen jeweils ein Vertragsverhältnis besteht.

Dabei ist es dem Kunden durch Konfiguration des Routers freigestellt, über welchen Anbieter welche Gespräche abgewickelt werden. Hierzu wird im Router bspw. über die Vorwahl eingestellt, welche Ziele über welchen Anbieter abgewickelt werden sollen. Weitere Einstellungsmöglichkeiten zur Anbieterauswahl, bspw. abhängig von Wochentag, Datum oder der Tageszeit oder unter Berücksichtigung von Verbindungspreistabellen (Least Cost Routing) und weitere, sind ebenfalls, abhängig vom jeweiligen Router-Modell, konfigurierbar. Beispielsweise könnte folgende Konfiguration vorgenommen werden: Gespräche ins Ausland stets über Anbieter A (Vorwahl 00) und Gespräche innerhalb Deutschlands (Vorwahl 0 oder innerorts ohne Vorwahl) über den Anbieter B.

Als weiteres Beispiel könnte auch die folgende Konfiguration vorgenommen werden: Am Wochenende zwischen 8:00 und 20:00 Uhr wähle Anbieter B, sonst Anbieter A, für ausgehende Gespräche. Der Kunde wählt die Zielrufnummer an seinem Telefon und der Router trifft, anhand der vorgenommenen Einstellungen, die Entscheidung, über welchen Anbieter und somit zu welchen Kosten das Gespräch geführt werden soll.

Dabei spielt die sogenannte IP-Telefonie (Internet Protocol-Telefonie) eine besondere Rolle. In der IP-Telefonie werden die Gesprächsdaten dem angewählten Gesprächspartner bzw. dessen Anbieter über das Internet bzw. ein IP-Netz zugeführt, was allgemein unter der englischen Bezeichnung "Voice over Internet Protocol", kurz VoIP, bekannt geworden ist. Dabei werden für Telefonie typische Informationen, d.h. Sprache und Steuerinformationen, beispielsweise für den Verbindungsaufbau, über ein für Datenübertragung nutzbares Netz übertragen. IP-Telefonie ist eine Technologie, die es ermöglicht, den Telefondienst auf IP-Infrastruktur zu realisieren, so dass diese die herkömmliche Telefontechnologie samt POTS, ISDN, Vermittlungsstellen, Netz und allen Komponenten ersetzen kann. Zielsetzung dabei ist eine Reduzierung der Kosten durch ein einheitlich aufgebautes und zu betreibendes Netz. Daraus ergibt sich ein deutlicher Bedarf an Lösungen zur Verbindung beider Telefoniesysteme (etwa über VoIP-Gateways) und die Notwendigkeit zur gezielten Planung des Systemwechsels unter Berücksichtigung der jeweiligen Möglichkeiten für Kosten- und Leistungsoptimierung. Dabei übernimmt ein Vermittlungsdienst in Form eines Servers diese Aufgabe und ermöglicht die Telefonie auch bei sich ändernden IP-Adressen der Netzteilnehmer bzw. IP-Telefone. Dies geschieht so, dass sich die VoIP-Telefone beim Server anmelden und der Server so die aktuelle IP-Adresse der Telefone kennt. Mit Hilfe der IP-Adresse des Telefons, die dem SIP-Server bekannt gemacht wurde, kann er die Vermittlung übernehmen und das IP-Telefon klingelt dann bei Anwahl der Rufnummer eines Teilnehmers in Abhängigkeit von seiner IP-Adresse, wenn sich das IP-Telefon zuvor von dort aus beim Vermittlungsserver registriert hat.

Das Telefonieren mit der IP-Telefonie kann sich für den Teilnehmer genauso darstellen wie in der klassischen Telefonie. Wie bei der herkömmlichen Telefonie teilt sich das Telefongespräch dabei in drei grundsätzliche Vorgänge auf, den Verbindungsaufbau, die Gesprächsübertragung und den Verbindungsabbau. Im Unterschied zur klassischen Telefonie werden bei VoIP aber keine dedizierten "Leitungen" durchgeschaltet, sondern die Sprache wird digitalisiert und in kleinen Daten-Paketen über das IP-Protokoll transportiert.

Der Auf- und Abbau von Rufen (Signalisierung) erfolgt über ein von der Sprachkommunikation getrenntes Protokoll. Auch die Aushandlung und der Austausch von Parametern für die Sprachübertragung geschehen über separate Protokolle. Dabei spielt der Verbindungsaufbau mit SIP (Session Initiation Protocol) eine besondere Rolle. Grundsätzlich eignet sich SIP auch für Einsatzszenarien über VoIP und Videotelefonie hinaus.

Die Teilnehmer besitzen bei SIP eine SIP-Adresse (ähnlich einer E-Mail-Adresse) im Uniform-Resource-Identifier-Format (URI-Format), wie zum Beispiel "sip:12345@example.com". SIP-Endgeräte müssen sich regelmäßig bei einem SIP-Registrar-Server registrieren. Zum Aufbau einer Verbindung schickt das Endgerät des Anrufers eine Nachricht an diesen Server, der dem DNS unter dem Domainnamen "example.com" bekannt oder im Endgerät fest eingestellt ist. Der Server leitet die Nachricht an die ihm bekannte IP-Adresse des angerufenen Teilnehmers weiter, mit welcher sich dieser zuvor am Server registriert hat.

Eine direkte Kommunikation zwischen den beiden Endgeräten hat bis jetzt noch nicht stattgefunden. Zum Aufbau einer Verbindung zwischen den Endgeräten erfolgt zunächst die Aushandlung von Verbindungsparametern. Im Rahmen dieses Austauschs zum Aufbau einer Session werden zwischen den Endgeräten alle relevanten Informationen über Eigenschaften und Fähigkeiten ausgetauscht. Die Geräte von Anrufer und Angerufenem einigen sich dabei für diese Verbindung auf Übertragungsverfahren und Protokolle, welche von beiden Seiten unterstützt werden. Für die Übertragung dieser Daten in Echtzeit wird üblicherweise das Real-Time Transport Protocol (RTP) eingesetzt. Zur Beendigung des Gesprächs sendet eines der Endgeräte eine SIP-Nachricht an den Server, der diese an den anderen Teilnehmer weitergibt. Beide Endgeräte beenden dann die Verbindung. Für Nutzer, die über das Internet mit anderen Internetnutzern telefonieren wollen, bieten viele Dienstanbieter SIP-Adressen an. SIP-Adressen sind, anders als Telefonnummern oder MSNs, nicht an einen Anschluss gebunden, sondern wie E-Mail-Accounts von jedem Internetanschluss der Welt aus nutzbar. Diverse Dienstanbieter bieten auch die Zuordnung einer Festnetz-Rufnummer zu einer SIP-Adresse an und übernehmen das Routing der Gespräche zwischen den verschiedenen Netzen. Der Nutzer ist somit mit seinem VoIP-Telefon und seiner SIP-Adresse auch aus dem herkömmlichen Telefonnetz erreichbar.

Derartige Verfahren und Systeme sind darüber hinaus im Stand der Technik aus der DE 10 2011 053 994 B3 bekannt. Diese Druckschrift offenbart ein Verfahren, das einem anrufenden Teilnehmer die Möglichkeit eröffnet, mit einem Telefonendgerät unter Anwahl einer Festnetzrufnummer ein Telefongespräch mit einem für das Telefongespräch ein Mobilfunkendgerät verwendenden Teilnehmer zu führen, sofern die Mobilfunknummer des angerufenen Teilnehmers zuvor auf einer VoIP-Plattform in Zuordnung zu der angerufenen Festnetzrufnummer registriert wurde. Als nachteilig an diesem Verfahren wird es empfunden, dass die anzurufende Mobilfunkrufnummer vorher bereits registriert sein muss, um über die VoIP-Plattform zu kommunizieren.

Ein weiteres Verfahren und dazugehörige Systeme sind aus der DE 10 2006 050 328 A1 bekannt geworden. Diese Erfindung betrifft eine Rufweiterleitung für eine VoIP-Telefonverbindung, bei der ein Umleitungsserver auf dem Endgerät eines Anrufers vorinstalliert ist. Die Erfindung sieht vor, dass im Falle der Unmöglichkeit einer Verbindung einer gewählten Telefonverbindung zu einer IP-Adresse, eine alternative Verbindung hergestellt wird. Nachteilig an diesem System ist es einerseits, dass die alternativen Verbindungen alle vorab registriert sein müssen und andererseits der technische Aufwand vergleichsweise hoch ist, um eine beliebige Verbindung herzustellen.

Als nachteilig am gesamten Stand der Technik wird es ferner empfunden, dass (VoIP-) Router keine einfache Möglichkeit bieten, einen vorhandenen Mobilfunkanschluss ohne zusätzliche Geräte und hohem technischen Aufwand als Anbieter für externe Gespräche mit bereits vorhandenen und an den Router angeschlossenen, Telefongeräten zu nutzen. Weiterhin ist als nachteilig anzusehen, dass ein auf einem Mobilfunkgerät eingehender Anruf nicht ohne zusätzlichen Aufwand an den vorhandenen, an den Router angeschlossenen Telefongeräten, entgegengenommen werden kann, weil die vorhandenen Mobilfunkgeräte keinen Zugriff auf die am Mikrofon und dem Kopfhörer anliegenden Sprachdaten zulassen. Im Stand der Technik existieren zwar aufwändige Lösungen, die jedoch eigenständige und teure Geräte umfassen, in die separat eine SIM-Karte eines Mobilfunkanbieters eingelegt werden muss oder welche nur in Kooperation mit einem Mobilfunkgerät über die Bluetooth-Schnittstelle funktionieren.

Daher ist es Aufgabe der vorliegenden Erfindung, ein Verfahren in einem System bereitzustellen, das in der Lage ist, mindestens ein Telefonat mit einem beliebigen Telefonteilnehmer von mindestens einem, an einen Router angeschlossenen Endgerät, über mindestens eine Mobilfunkverbindung eines Mobilfunkgeräts zu führen, wobei auf die Sprachdaten am Kopfhörer und dem Mikrofon des Mobilfunkgerätes zugegriffen werden kann.

Ein weiterer Aspekt der vorliegenden Erfindung ist darin zu sehen, ein System und ein Verfahren bereitzustellen, das in der Lage ist, eingehende Anrufe auf mindestens einer, einem Mobilfunkgerät zugeordneten, Rufnummer an mindestens einem Endgerät entgegenzunehmen und zu führen, welches an einen Router angeschlossen ist.

Diese Aufgabe wird mit den kennzeichnenden Merkmalen der Hauptansprüche gelöst.

Das erfindungsgemäße Verfahren zur Anwahl eines beliebigen Telefongesprächsteilnehmers über die Telefonverbindung eines Mobilfunknetzes, wobei das Telefonieendgerät auf der Anruferseite mindestens einen Router und mindestens ein Mobilfunkgerät aufweist, auf dem eine Software installiert wird, die einen VoIP-Server erzeugt, der im Router als Anbieter für externe Telefonate konfiguriert wird, so dass bei Anwahl einer beliebigen Telefonnummer vom Telefonieendgerät, über die auf dem Mobilfunkgerät erzeugte VoIP-Plattform zur angewählten Rufnummer eine Verbindung über das Mobilfunknetz hergestellt wird, ist gekennzeichnet durch folgende Verfahrensschritte:
- Herstellung einer Verbindung zur angewählten Zielrufnummer, wobei die Daten des Audio-Signals in beiden Richtungen über das Mobilfunkgerät und den Router geführt werden; und
- automatische Konfiguration des mindestens einen Routers mittels der vorinstallierten Software auf dem Mobilfunkgerät, wobei
- eine Schalteinheit, an der die Audio-Gesprächsdaten aus Kopfhörer und Mikrofon in beiden Richtungen anliegen, die aus dem Mobilfunknetz empfangenen Audio-Sprachdaten einer Signalanpassung zuführt, die mit einem vorgegebenen Algorithmus die ein- und ausgehenden Audio-Sparsprachdaten bereinigt; und anschließend
- die bereinigten Audio-Sprachdaten dem Mobilfunknetz zur Weiterleitung an einen beliebigen ausgewählten Gesprächsteilnehmer gesendet wird.

Bei diesem Vorgang ist es vorteilhaft, dass bei Anschluß eines Head-Sets an das Mobilfunkgerät auf der Anruferseite zwischen Mikrofon und dem Kopfhörer eine elektrische/elektronische Verbindung hergestellt wird, damit die Sprachdaten von der Software des Mobilfunkgerätes ausgelesen werden können, um sie anschließend weiterverarbeiten zu können.

Mit anderen Worten hat dieses Verfahren zur Anwahl eines beliebigen Telefongesprächsteilnehmers über die Telefonverbindung eines Mobilfunkanbieters, mit mindestens einem Router und mindestens einem Mobilfunkgerät, auf dem eine Software gespeichert wird, auf der Anruferseite den Vorteil" dass die auf dem Mobilfunkgerät installierte Software, eine zusätzliche Funktion, einen VoIP-Server, auf dem Mobilfunkgerät erzeugt, so dass bei Anwahl einer beliebigen Telefonnummer ins Festnetz oder in ein Mobilfunknetz, von einem an den Router angeschlossenen Endgerät, die Telefonverbindung zu der angewählten Rufnummer über eine VoIP-Plattform hergestellt wird.

Das System zur Durchführung des erfindungsgemäßen Verfahrens zur Anwahl eines beliebigen Telefongesprächsteilnehmers über ein Mobilfunknetz eines Mobilfunkanbieters, mit mindestens einem Router auf der Anruferseite und mindestens einem Mobilfunkgerät auf der Anruferseite auf dem eine Software installiert ist, zeichnet sich dadurch aus, dass die vorinstallierte Software eine zusätzliche VoIP-Server-Funktion automatisch erzeugt, die es ermöglicht, das Mobilfunkgerät als VoIP-Server zu nutzen, so dass bei Anwahl einer beliebigen Telefonnummer die Sprachdaten über die Mobilfunkverbindung zu der angewählten Rufnummer, bzw. dem Telefonteilnehmer zugeführt werden.

Das erfindungsgemäße Verfahren wird auch dadurch verwirklicht, indem mit Hilfe der vorinstallierten Software im Router als zusätzlicher zu den bereits vorhandenen Anbietern, wie z.B. Telekom, 1&1, ein eigenes Mobilfunkgerät, Tablet etc. mit Mobilfunkvertrag als "Anbieter" eingebunden wird.

Infolge der Leistungsfähigkeit der heutigen Mobilfunkgeräte ist es möglich, einen VoIP-Server (SIP-Server) auf Mobilfunkgeräten zu betreiben, wie er von den bekannten Anbietern (Telekom, 1&1, Sipgate etc.) üblicherweise in großen Rechenzentren betrieben wird. So ergibt sich die Möglichkeit, Mobilfunkgeräte mit einer Telefon-Schnittstelle ins Mobilfunknetz in einen mobilen Telefon-Server bzw. ein VoIP-Gateway umzuwandeln. Dazu bietet die Installation der Software auf einem Mobilfunktelefon die Möglichkeit, den heimischen Router so zu konfigurieren, dass teure Gespräche in bestimmte Netze (z.B. Mobilfunknetze), nicht mehr über den Festnetz-Anbieter abgewickelt werden, sondern über das Mobilfunkgerät bzw. den damit verbundenen Mobilfunkvertrag und somit auch zu den gegebenen vertraglichen Konditionen. Da heute bei Mobilfunkverträgen eine "Allnet"-Flatrate in alle Mobilfunknetze und ins Festnetz stark verbreitetet ist, fallen beim Einsatz einer Server erzeugenden Software auf dem Mobilfunkgerät in dem erfindungsgemäßen System somit keine zusätzlichen Kosten für Mobilfunkgespräche mehr an.

Durch die Integration des Mobilfunkgerätes in die heimische Telekommunikations-Infrastruktur kann so zuhause oder im Büro mit den gewohnten Festnetz-Telefonen bzw. Endgeräten telefoniert und die tariflichen Vorteile eines Handy-Vertrags auch mit den Haustelefonen bzw. Endgeräten genutzt werden.

Im Einzelnen ist es dabei vorteilhaft, dass der Router bei Wahl einer beliebigen Telefonnummer eine Verbindung zum Mobilfunkgerät herstellt und dieses als externer Anbieter für Telefongespräche und andere Datenübertragungen in beliebige Netze nutzt.

Ferner ist es vorteilhaft, dass das Mobilfunkgerät sich in beliebige Netze einwählen kann.

Ein weiterer Vorteil besteht darin, dass der Router in der Lage ist, per WLAN mit dem Mobilfunkgerät zu kommunizieren.

Zusätzlich ist es von Vorteil, dass das Mobilfunkgerät in der Lage ist, per WLAN mit einem Router zu kommunizieren.

Vorteilhaft ist es auch, dass die Software auf dem Mobilfunkgerät einen vollständigen VoIP-Server generiert, der im Router als externer VoIP-Anbieter konfiguriert wird und für vorbestimmte ausgehende Gespräche eingestellt wird.

Vorteilhaft ist es ferner, dass der Router dabei so konfiguriert werden kann, dass alle Gespräche über das konfigurierte Mobilfunkgerät geführt werden oder anhand bestimmter Parameter (z.B. Vorwahl, Wochentag, Datum, Uhrzeit, Preistabellen) der Router die Entscheidung trifft, für welche Gespräche das Mobilfunkgerät als Netzanbieter eingestellt wird.

Ferner ist es vorteilhaft, dass das Mobilfunkgerät die Verbindung zur angewählten Zielrufnummer herstellt, wodurch die Daten des Audio-Signals in beiden Richtungen über das Mobilfunkgerät und den Router übertragen werden.

Ein weiterer Vorteil wird darin gesehen, dass alle an die Rufnummer des Mobilfunkgeräts adressierten Anrufe über das Mobilfunkgerät und den Router an die an den Router angeschlossenen Haustelefone bzw. Endgeräte geleitet werden können.

Vorteilhaft ist es ferner, dass der Router geeignet ist, Telefonie und Internetverbindungen bereitzustellen.

Vorteilhaft wirkt es sich weiterhin aus, dass der Router in der Lage ist, mehrere Netzanbieter parallel zu bedienen.

Ein Vorteil wird ferner darin gesehen, dass die Konfiguration des Routers automatisch mittels der vorinstallierten Software auf dem Mobilfunkgerät vorgenommen werden kann.

Weiterhin ist es Vorteilhaft, dass das Mobilfunkgerät in WLAN-Reichweite des Routers überall dort platziert werden kann, wo die beste Mobilfunknetzverbindung besteht.

Zusätzlich ist es Vorteilhaft, dass das Mobilfunkgerät über das IP-Netz auch entfernten Standorten (z.B. über das Internet) zur Nutzung zugänglich gemacht werden kann.

Im nun Folgenden wird die Erfindung anhand von Zeichnungen im Einzelnen näher beschrieben. Es zeigt
- Fig. 1:: ein Blockschaltbild des Systems (1) zwischen einem ersten Teilnehmer (2) und einem beliebigen zweitem Teilnehmer (3, 4);
- Fig. 2:: ein Blockschaltbild eines Ausschnitts des Systems (1) im Bereich des mindestens einem Haustelefon bzw. Endgerät (2);
- Fig. 3:: ein Flussdiagram des erfindungsgemäßen Verfahrens mit einem konfigurierten Router (5) und mindestens einem vorinstallierten Mobiltelefon (6);
- Fig. 4:: ein Flussdiagram eines zweiten Anwendungsfalls des erfindungsgemäßen Verfahrens mit einem konfigurierten Router (5) und mindestens einem vorinstallierten Mobiltelefon (6);
- Fig. 5:: ein weiteres Flussdiagram des erfindungsgemäßen Verfahrens mit mindestens einem vorinstallierten Mobiltelefon (6);
- Fig. 6:: ein Blockschaltbild eines Mobilfunkgerätes (6) bei dem das Mikrofon (12) und der Hörer bzw. Lautsprecher (13) mit einer Schalteinheit (14) verbunden sind.
- Fig. 7:: ein Blockschaltbild des Mobilfunkgeräts (6) mit seiner technischen Peripherie.

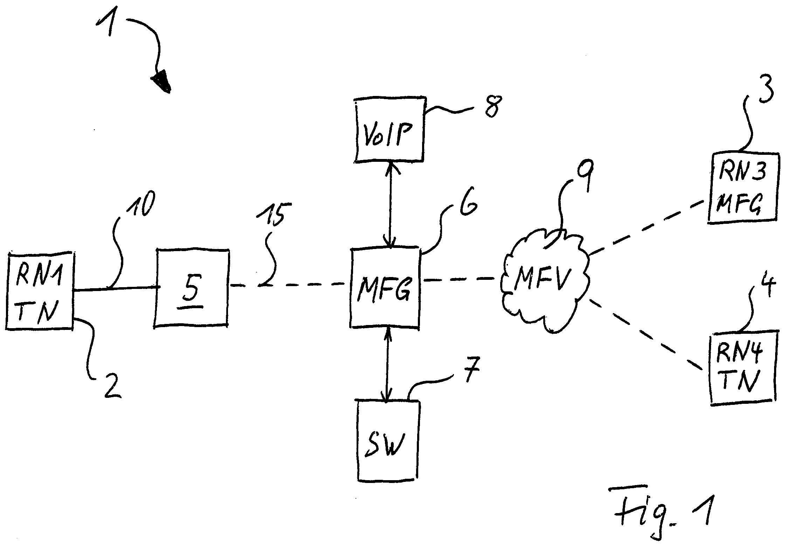

Die Fig. 1 zeigt eine Blockdarstellung des System 1 mit einem lokalen Teilnehmer 2 und mindestens einem freiwählbaren Telefon-Teilnehmer 3, 4, wobei der frei wählbare Telefon-Teilnehmer entweder ein Mobilfunk- 3 oder ein Festnetzteilnehmer 4 sein kann. Das System 1 ist darüber hinaus durch das Zusammenwirken eines konfigurierten Routers 5 und eines mit einer Software 7 beaufschlagten Mobilfunkgerätes 6 gekennzeichnet. Das Mobilfunkgerät kann sowohl ein Smartphone als auch Tablet oder ähnliches Gerät sein, auf dem die Software 7 installiert ist. Das Mobilfunkgerät 6 weist ferner eine VoIP-Plattform 8 auf, die grundsätzlich ein VoIP-Gateway in ein Mobilfunknetz 9 ermöglicht, so dass zwischen dem Mobilfunkgerät 6 und einem beliebigen Telefon-Teilnehmer 3, 4 Gesprächsdaten in ein IP-Netz übertragen werden können. Das Mobilfunkgerät 6 ist dabei im Bereich des Routers 5 positioniert, so dass zwischen diesen beiden Geräten ein Datenaustausch 14 gewährleistet ist (z.B. per WLAN, Kabelverbindung, USB o.ä.). Der Telefon- Teilnehmer 2 ist mit dem Router 5 über eine Datenverbindung (z.B. per WLAN, Kabelverbindung, USB o.ä.) 10 verbunden.

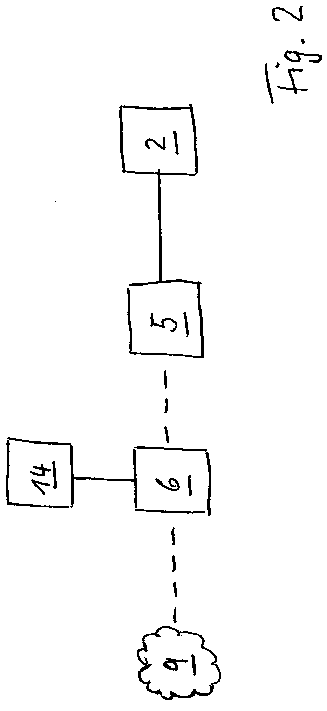

Die Fig. 2 zeigt ein schematisches Blockschaltbild in der unmittelbaren Umgebung des Routers (5), der über die Datenverbindung (10) mit dem Telefon-Teilnehmer (2), bzw. dem Endgerät des Teilnehmers verbunden ist. Der Router (5) und das Mobilfunkgerät (6) tauschen ihre Daten kabellos über WLAN oder kabelgebundener Datenverbindung aus (14). Die Gesprächsdaten, die vom Teilnehmer (2) ausgehen, werden per Funk in das Mobilfunknetz (9) übertragen und von dort aus weiter an die verschiedenen Telefonteilnehmer (3, 4) geleitet. Da es im Allgemeinen bei Mobilfunkgeräten nicht möglich ist, einen direkten Zugriff auf die eingehenden Audiodaten zu nehmen, ist der Headset-Ausgang des Mobilfunkgerätes (6) mit einer zusätzlichen elektronischen Schalteinheit (11) verbunden, die das Mikrofon (12) mit dem Ausgang des Hörers (13) kurzschließt. Diese Funktion wird weiter unten näher beschrieben.

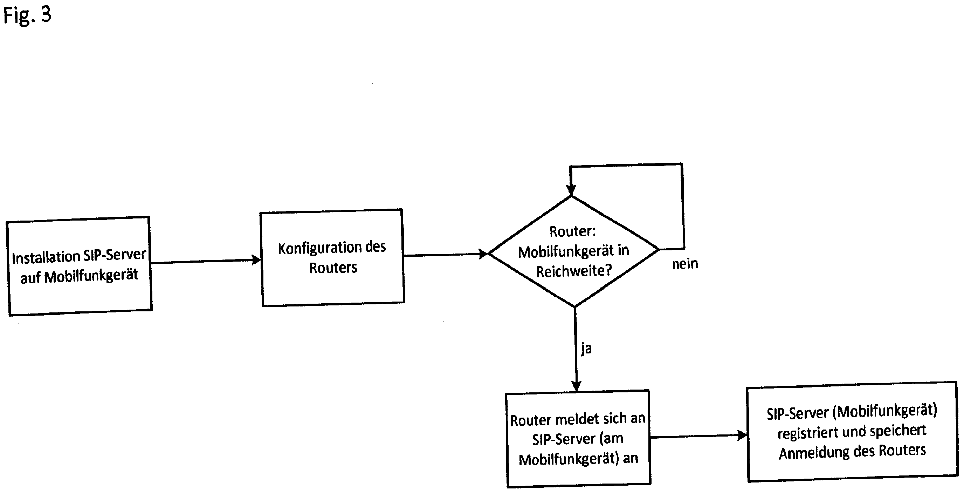

Die Fig. 3 zeigt ein schematisches Daten-Flussdiagram des erfindungsgemäßen Verfahrens, bei dem der Router (5) gemäß der Vorgaben der Erfindung bereits konfiguriert ist. Dieses Verfahren beschreibt in verkürzter Weise die notwendigen Schritte, um auf einem Mobiltelefon (6), Tablet etc. die Funktion des VoIP-Servers und die Konfiguration der Endgeräte, über die telefoniert werden soll, bereitzustellen.

In einem ersten Schritt wird dabei eine Software auf das Mobiltelefon (6), Tablet etc. (bspw. in Form einer "App") installiert. Die Software stellt auf dem Mobilfunkgerät auf dem die Software installiert wurde, zusätzlich zu den bisherigen Funktionen, einen Server für die Internet-Telefonie (VoIP, Voice-over-IP) zur Verfügung und dient somit als VolP-Gateway in der VoIP-Plattform (8), über die in Kombination mit einem weiteren Endgerät (VoIP-Client, bspw. Router) Gesprächsdaten über das Mobilfunknetz (9) abgewickelt werden können.

In einem zweiten Schritt erfolgt die Konfiguration zusätzlicher Endgeräte (Router mit angeschlossenen Telefonen, VoIP-Telefon etc.), so dass sich diese am Gerät aus dem ersten Verfahrensschritt anmelden. Dieser Fall ist von der Vorgehensweise her identisch, als würde man an diesem Endgerät einen herkömmlichen VoIP-Anbieter einrichten, welcher ebenfalls SIP-Server betreibt, jedoch mit dem Unterschied das der Anbieter in diesem Fall kein TK-Unternehmen ist, welches seine SIP-Server im Internet betreibt, sondern der Anbieter ist in diesem Falle das Gerät aus dem ersten Verfahrensschritt, auf dem der SIP-Server läuft.

Die manuelle Konfiguration aus dem zweiten Verfahrensschritt kann optional ebenso während der Installation der Software aus dem ersten Verfahrensschritt automatisiert erfolgen.

Durch die Installation der Software (7) auf dem Mobilfunkgerät (6) wird dieses zu einem eigenen Anbieter für Telefoniedienste. Infolge der Integration des Mobilfunkgeräts (6) mit der Software (7) als "Telefonieanbieter" in die heimische Telekommunikationslandschaft können die vorhandene Heim-Telefone (2) und gleichzeitig die vertraglichen Konditionen des Mobilfunkvertrages genutzt werden ohne das Endgerät wechseln bzw. das Mobilfunkgerät (6) als Endgerät verwenden zu müssen.

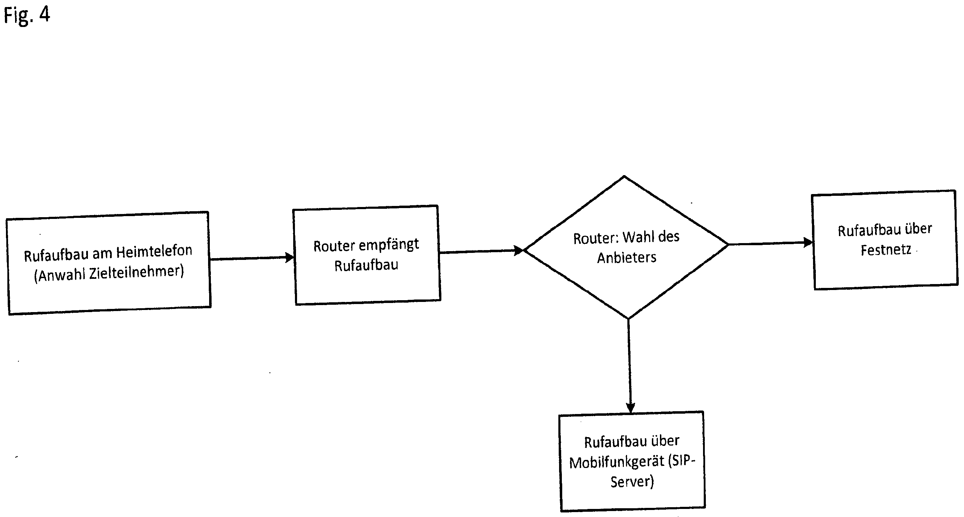

Die Fig. 4 zeigt schematisch das Daten-Flussdiagram eines weiteren Anwendungsfalles des erfindungsgemäßen Verfahrens, bei dem die Software (7) auf dem Mobilfunkgerät (6) installiert worden ist und das Endgerät (2), welches verwendet werden soll, entsprechend konfiguriert ist. Dieser Anwendungsfall entspricht einem ausgehenden Telefongespräch, bei dem die Daten vom Teilnehmer (2) erzeugt werden und einem beliebigen Teilnehmer (3, 4) zugeführt werden sollen.

In einem ersten Schritt wird am Endgerät (2), bzw. an einem am VoIP-Router (5) angeschlossenen Telefon eine beliebige Rufnummer gewählt und die Anfrage über den Router an das Mobiltelefon, Tablet etc. auf dem der SIP-Server installiert ist, weitergeleitet.

In einem zweiten Verfahrensschritt empfängt das Mobiltelefon (6), auf dem der SIP-Server (7) installiert ist, die Anfrage und baut eine Verbindung zur gewählten Rufnummer über das Mobilfunknetz (9) auf. Sodann wird dem Endgerät, von dem die Anfrage empfangen wurde, der Rufaufbau signalisiert. Sobald dann der angerufene Teilnehmer (3, 4) abnimmt, bzw. die Verbindung zum angerufenen Teilnehmer hergestellt wurde, wird der erfolgreiche Aufbau der Telefonverbindung dem Endgerät (2) signalisiert und die Sprachdaten übermittelt. Legt nun einer der Teilnehmer auf, wird diese Handlung entsprechend in beiden Richtungen signalisiert und die Telefonverbindung, bzw. Mobilfunkverbindung abgebaut.

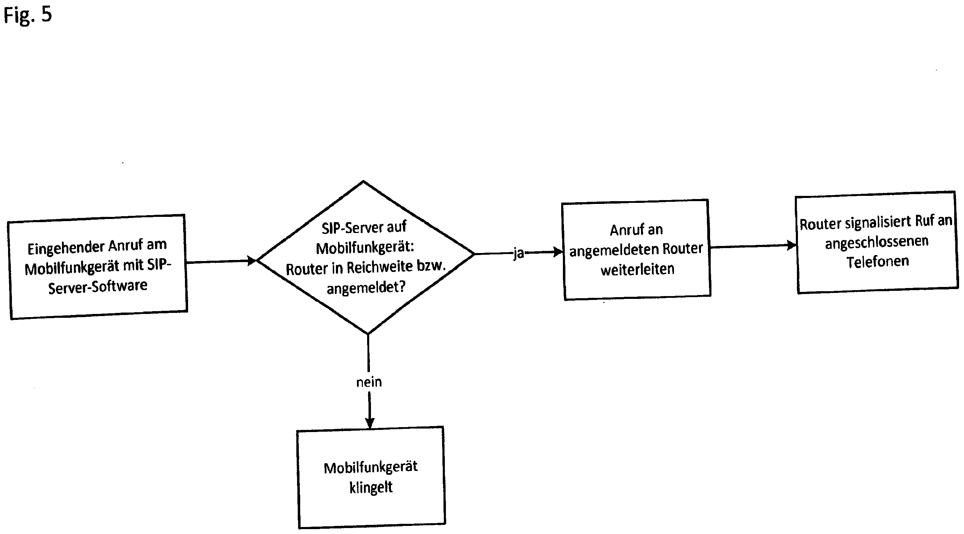

Die Fig. 5 zeigt einen dritten Anwendungsfall eingehender Gesprächsdaten, bei dem die Software (7) bereits vorinstalliert ist und die Endgeräte (2, 5) des Systems 1 entsprechend konfiguriert bzw. angeschlossen sind. Dabei gehen am Mobilfunkgerät (6) Gesprächsdaten auf dessen Mobilfunk-Rufnummer (z.B. 0177 1234567) ein. In einem zweiten Verfahrensschritt erkennt die Software (7) auf dem Mobilfunkgerät (6) den eingehenden Anruf und signalisiert den eingehenden Anruf an den Router (5). In einem weiteren Verfahrensschritt empfängt der Router (5) die Anfrage und signalisiert den eingehenden Anruf an die angeschlossenen Telefone (2). Sobald die am Mobilfunkgerät (6) eingehende Gesprächsanfrage an einem, am Router angeschlossenen, Telefon (2) angenommen wird, wird die Sprachverbindung hergestellt. Legt einer der Teilnehmer auf, wird das entsprechend in beide Richtungen signalisiert und die Telefonverbindung (bzw. Mobilfunkverbindung) abgebaut.

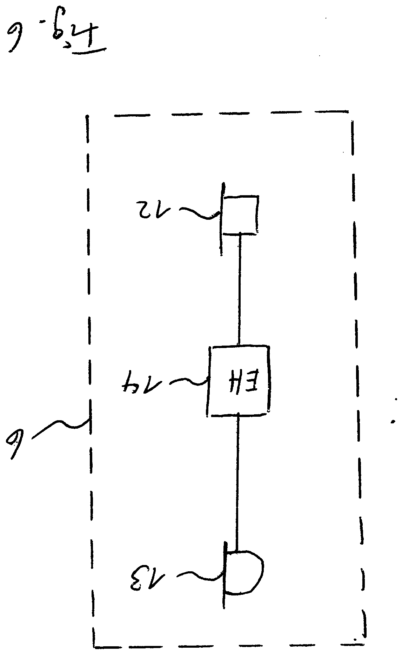

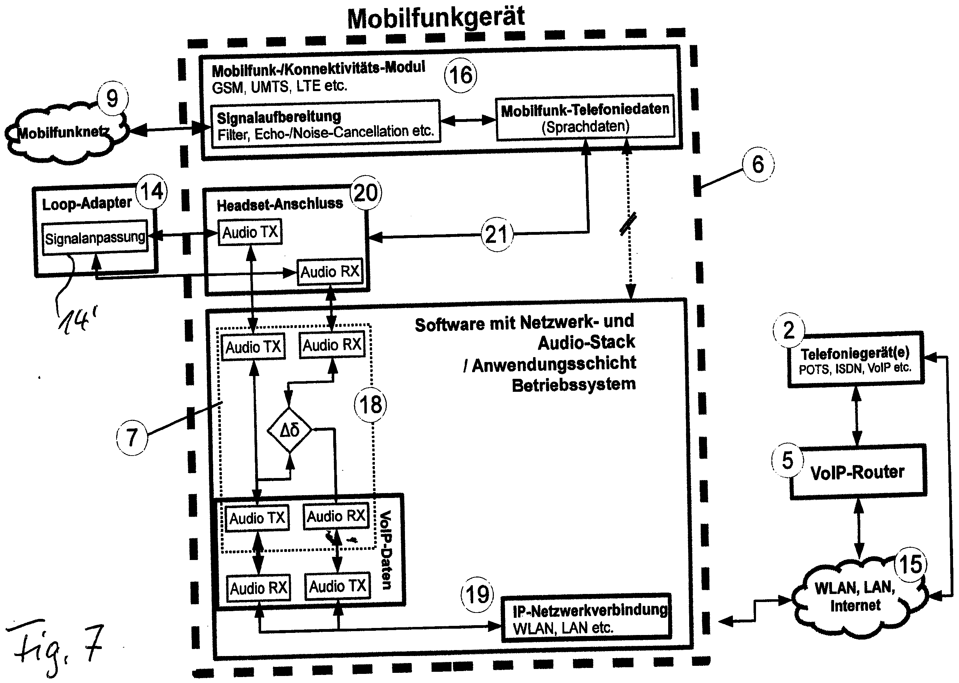

Die Fig. 6 zeigt schematisch ein Blockschaltbild eines Mobilfunkgerätes (6), bei dem das Mikrofon (12) und der Hörer (13) mittels einer Schalteinheit (14) untereinander verbunden sind. Bei (Mobilfunk-) Telefoniegeräten ist im Allgemeinen der gleichzeitige Zugriff auf eingehende Gesprächsdaten (ausgegeben am Hörer) und ausgehenden Gesprächsdaten (aufgezeichnet durch das Mikrofon) (software- und/oder hardwaretechnisch) blockiert. Die über den Hörer wiedergegebenen Daten können üblicherweise nur über die Freisprechen-Funktion desselbigen Geräts mit dessen Mikrofon verlustbehaftet und mit Nebengeräuschen aufgezeichnet werden. Die Schalteinheit (14) hat die Funktion diese Beschränkung durch Kurzschluss von Mikrofon und Hörer zu umgehen. So können eingehende Gesprächsdaten, welche üblicherweise durch den Hörer wiedergegeben werden, nahezu verlustfrei über den Mikrofon-Eingang des Geräts aufgezeichnet werden. Die Schalteinheit (14) verwendet zur Verbindung des wiedergebenden Hörers und aufzeichnenden Mikrofons den Headset-Anschluss bzw. Kopfhörer- (13) und Mikrofon-Anschluss (12) des Geräts. Die Funktionsweise der Schalteinheit 14 für den Headset-Anschluss 20 des Mobilfunkgeräts 6 wird wie folgt in Fig. 7 im Einzelnen näher beschrieben.

Die Figur 7 zeigt ein Blockschaltbild des Mobilfunkgeräts 6 mit seiner technischen Peripherie. Nach dem Gesprächsaufbau werden Audio-Sprachdaten über das Mobilfunknetz 9 und das Mobilfunkgerät 6 übertragen. Die Sprachdaten werden aufbereitet, verstärkt bzw. gedämpft und Störeffekte entfernt. Anschließend stehen die empfangenen Audiodaten am Hörer 13 (Lautsprecher) und am Headset-Anschluss 20 des Mobilfunkgeräts zur Verfügung und können dort wiedergegeben werden. Empfangene Audiosignale über das Mikrofon des Mobilfunkgeräts bzw. über ein an den Headset-Anschluss 20 angeschlossenes Mikrofon werden empfangen und anschließend dem Mobilfunkmodul 16 zugeführt, damit eine bidirektionale Kommunikation mit dem über das Mobilfunknetz 9 verbundenen Gesprächsteilnehmer möglich ist.

Aufgrund von hard- und/oder softwaretechnischer Beschränkungen in einer Vielzahl von Mobilfunkgeräten können die im Mobilfunkmodul 16 über das Mobilfunknetz 9 empfangenen Audio-Sprachdaten nicht direkt in der Software verarbeitet werden. Durch das Einstecken eines speziell, rein elektronisch realisierten hier sogenannten Loop-Adapters 14 am Headset-Anschluss 20 des Mobilfunkgeräts, werden die Audio-Sprachdaten, empfangen aus dem Mobilfunknetz 9, nach vorheriger Signalanpassung im Loop-Adapter 14 auf den Mikrofoneingang des Headset-Anschlusses 20 zurückgeführt.

Durch das erzeugte "Mischsignal" entsteht soz. eine Rückkopplung, da das empfangene Sprachsignal direkt wieder zurückgegeben wird; diese müsste jedoch durch die Signalaufbereitung, insbesondere die sog. Echo-Cancelation im Mobilfunkmodul 16 entfernt bzw. herausgerechnet werden.

Die am Mikrofon bzw. am Mikrofon-Eingang des Headset 20 empfangenen Audiosignale können mit der Software 18 der Einheit 7 verarbeitet werden und so in VoIP-Daten (zum Beispiel SIP, RTP/RTCP) konvertiert werden, welche über die Netzwerkverbindung 19 des Mobilfunkgeräts 6 anschließend an einen VoIP-Router 5 und schließlich an ein externes Telefonieendgerät 2 weitergeleitet werden. Auf dem externen Telefonieendgerät 2 sind die aus dem Mobilfunknetz 9 empfangenen Audio-Gesprächsdaten hörbar.

Handelt es sich bei dem Telefonieendgerät um ein VoIP-fähiges Endgerät, kann der zwischengeschaltete VoIP-Router auch entfallen und die Verbindung zwischen Telefonieendgerät und der Software auf dem Mobilfunkgerät über das Netzwerk 15 direkt erfolgen.

Am Mikrofon des Telefonieendgeräts 2 empfangene Audio-Sprachdaten gelangen im VolP-Format über die Netzwerkverbindung 19 des Mobilfunkgeräts 6 in die signalverarbeitende Software auf dem Mobilfunkgerät. Diese werden auf dem Kopfhörer-Ausgang am Headset-Anschluss 20 wiedergegeben und durch den gesteckten Adapter 14 wieder am Mikrofoneingang des Headset-Anschlusses 20 empfangen. So gelangen die Gesprächsdaten in das Mobilfunkmodul 16 wodurch diese in das Mobilfunknetz 9 an den Gesprächsteilnehmer 3,4 übermittelt werden. Der über das Mobilfunknetz 9 verbundene Gesprächsteilnehmer hört die am Telefonieendgerät 2 empfangenen Audio-Sprachdaten.

Durch den Loop-Adapter 14 liegen die Audio-Gesprächsdaten für RX und TX stets doppelt bzw. in beiden Richtungen an. Da die Software im Mobilfunkgerät 6 die vom Telefonieendgerät 2 empfangenen Audio-Sprachdaten kennt, welche sie auf dem Headset-Anschluss 20 ausgibt und gleichzeitig durch den Loop-Adapter 14 wieder zurückgeliefert bekommt, kann das vom Telefonieendgerät 2 in Richtung Mobilfunkgerät 6 übertragene Audio-Signal, durch den Loop-Adapter 14 in Empfangsrichtung-Rich erneut an der Softwareeinheit 18 anliegend, herausgerechnet werden, wodurch ein bereinigtes Empfangssignal für das Telefonieendgerät 2 generiert werden kann, welches nur die aus dem Mobilfunknetz 9 empfangenen Sprachdaten enthält.

Der Loop-Adapter 14 erzeugt auch in Richtung des Mobilfunkmoduls 16 eine Rückkopplung, welche die zum Headset-Anschluss 20 gesendeten Audiosignale 21 gleichzeitig wieder über den Mikrofon-Eingang des Headset-Anschlusses 20 zurück erhält. Das Mobilfunkmodul 16 kennt die empfangenen und auf dem Headset-Anschluss wiedergegebenen Audiodaten, welche durch den Loop-Adapter 14 wieder empfangen werden und kann somit diese "Rückkopplung" erkennen und das Audiosignal im Rahmen der Signalaufbereitung durch gleichen oder ähnlichen Algorithmus wie in der Einheit 7 mit einer Software 18 bereinigen. Somit wird in dem Mobilfunkmodul 16 ein bereinigtes Audiosignal erzeugt, welches über das Mobilfunknetz 9 an den darüber verbundenen Gesprächsteilnehmer 3,4 gesendet wird.

Mit der vorliegenden Erfindung, wird ein Mobilfunkgerät 6 u.a. zu einem mobilen VoIP-Server umgewandelt, der überall dort zur Verfügung steht, wo eine Mobilfunkverbindung zustande kommt. Dabei ist es nicht unbedingt notwendig, zusammen mit einem Router verwendet zu werden. Die Einheit 7 mit einer VoIPverarbeitenden Software 18 kann ebenfalls mit beliebigen VoIP-Telefonen und Endgeräten, welche über eine Datenschnittstelle (z.B. WLAN, LAN, USB) mit dem Mobilfunkgerät verbunden sind, verwendet werden, um Gespräche über die VoIP-Plattform auf dem Mobilfunkgerät zu führen und zu empfangen, ohne dass das Mobilfunkgerät 6 als Endgerät verwendet wird. Um unter anderem die Qualität der Sprechdaten zu verbessern, wird bei Anschluss eines Headsets an das Mobilfunkgerät 6 auf elektrisch/elektronischem Wege eine Verbindung zwischen dem Kopfhörer 13 und den Mikrofon 12 mittels einer Schalteinheit 14 eine Verbindung hergestellt, wodurch der Zugriff auf die an der Schalteinheit 14 anliegenden Sprachdaten ermöglicht wird. Mit der bereitgestellten Software in der Einheit 7 kann der Mobilfunkvertrag auch beliebigen anderen Personen über ein IP-Datennetz, bspw. über das Internet, zur Nutzung zur Verfügung gestellt werden. So könnten bspw. Auslandsgespräche über ein an das Internet angeschlossenes Mobilfunkgerät, welches sich stationär im angewählten Ausland befindet, aus Deutschland heraus abgewickelt werden. Das Gespräch wird somit zu den Konditionen des sich im Zielland befindenden Geräts abgewickelt.

## Patentansprüche

1. Verfahren zur Anwahl eines beliebigen Telefongesprächsteilnehmers (3, 4) über die Telefonverbindung eines Mobilfunknetzes (9), wobei das Telefonieendgerät (2) auf der Anruferseite mindestens einen Router (5) und mindestens ein Mobilfunkgerät (6) aufweist, auf dem eine Software (7) installiert wird, die einen VoIP-Server (8) erzeugt, der im Router (5) als Anbieter für externe Telefonate konfiguriert wird, so dass bei Anwahl einer beliebigen Telefonnummer (3,4) vom Telefonieendgerät (2), über die auf dem Mobilfunkgerät (6) erzeugte VoIP-Plattform zur angewählten Rufnummer eine Verbindung über das Mobilfunknetz (9) hergestellt wird, **gekennzeichnet durc**h folgende Verfahrensschritte:
- Herstellung einer Verbindung zur angewählten Zielrufnummer, wobei die Daten des Audio-Signals in beiden Richtungen über das Mobilfunkgerät (6) und den Router (5) geführt werden; und
- automatische Konfiguration des Routers (5) mittels der vorinstallierten Software (7) auf dem Mobilfunkgerät (6), wobei
- mit einer Schalteinheit (14), an der die Audio-Gesprächsdaten aus Kopfhörer (13) und Mikrofon (12) in beiden Richtungen anliegen, die aus dem Mobilfunknetz (9) empfangenen Audio-Sprachdaten einer Signalanpassung (14') zugeführt werden, die mit einem vorgegebenen Algorithmus die ein- und ausgehenden Audio-Sparsprachdaten bereinigt; und
- die bereinigten Audio-Sprachdaten dem Mobilfunknetz (9) zur Weiterleitung an den Gesprächsteilnehmer (3,4) gesendet werden.

2. Verfahren nach Anspruch 1, **dadurch gekennzeichnet, dass** bei Anschluß des Head-Sets an an die Telefongerät (2) auf der Anruferseite zwischen und Mikrofon () dem Kopfhörer () eine elektrische/elektronische Verbindung hergestellt wird.

3. Verfahren nach Anspruch 1, **dadurch gekennzeichnet, dass** auf der Seite zwischen dem Kopfhörer () der Router (5) bei Wahl einer beliebigen Telefonnummer eine Verbindung zum routernahen Mobilfunkgerät (6) herstellt und dieses als externen Anbieter für Telefongespräche und andere Datenübertragungen in beliebige Netze nutzt.

4. Verfahren nach Anspruch 1, **dadurch gekennzeichnet, dass** der Router (5) in der Lage ist, per Datenverbindung mit dem Mobilfunkgerät (6) zu kommunizieren.

5. Verfahren nach Anspruch 1, **dadurch gekennzeichnet, dass** am Hörerausgang des Mobilfunkgerätes (6) eine an sich bekannte Schalteinheit (11) angeschlossen wird, die mit dem Mikrofon-Eingang des Mobilfunkgerätes (6) in Verbindung steht.

6. Verfahren nach Anspruch 1, **dadurch gekennzeichnet, dass** der Router (5) so konfiguriert wird, dass für ausgewählte Gespräche, ein vorbestimmtes Mobilfunkgerät (6) als Netzanbieter eingestellt wird.

7. System (1) zur Anwahl eines beliebigen Telefongesprächsteilnehmers (3, 4) über ein Mobilfunknetz (9) eines Mobilfunkanbieters, mit mindestens einem Router (5) auf der Anruferseite und mindestens einem Mobilfunkgerät (6) auf der Anruferseite auf dem eine Software (7) installiert ist, **dadurch gekennzeichnet, dass** die vorinstallierte Software (7) eine zusätzliche VoIP-Server-Funktion automatisch erzeugt, die es ermöglicht, das Mobilfunkgerät (6) als VoIP-Server zu nutzen, so dass bei Anwahl einer beliebigen Telefonnummer (3, 4) die Sprachdaten über die Mobilfunkverbindung (9) zu der angewählten Rufnummer, bzw. dem Telefonteilnehmer (3, 4) zugeführt werden.

8. System nach Anspruch 6, **dadurch gekennzeichnet, dass** der Router (5) geeignet ist, Telefonie und Internetverbindungen bereitzustellen.

9. System nach Anspruch 6, **dadurch gekennzeichnet, dass** der Router (5) in der Lage ist, mindestens einen VolP-Telefonanbieter zu bedienen.

10. System (1) nach Anspruch 6, **gekennzeichnet durch** eine Schalteinheit (14), die Sprechdaten aus dem Hörer (13) des Mobilfunkgeräts (6) mit dem Mikrofon (12) des Mobilfunkgeräts (6) und umgekehrt überträgt.

11. System (1) nach einem der vorangegangenen Ansprüche, **dadurch geken nzeichnet**, dass die Schalteinheit (11) als steckbarer Stick ausgebildet ist.
